(19) Europäisches Patentamt
European Patent Office
Office européen des brevets

(11) EP 2 222 054 B1

(12) **EUROPEAN PATENT SPECIFICATION**

(45) Date of publication and mention
of the grant of the patent:
**18.04.2012 Bulletin 2012/16**

(51) Int Cl.:
*H04L 29/08* (2006.01)     *H04L 29/06* (2006.01)

(21) Application number: **09153453.7**

(22) Date of filing: **23.02.2009**

(54) **Method, system and apparatus for connecting a plurality of client machines to a plurality of servers**

Verfahren, System und Vorrichtung zum Verbinden von mehreren Client-Maschinen mit mehreren Servern

Procédé, système et appareil pour la connexion d'une pluralité de machines client à une pluralité de serveurs

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**25.08.2010 Bulletin 2010/34**

(73) Proprietor: **RESEARCH IN MOTION LIMITED Waterloo, Ontario N2L 3W8 (CA)**

(72) Inventor: **Preiss, Bruno R.
Waterloo Ontario N2L 5Z5 (CA)**

(74) Representative: **MERH-IP
Matias Erny Reichl Hoffmann
Paul-Heyse-Strasse 29
80336 München (DE)**

(56) References cited:
**US-A1- 2003 108 052     US-A1- 2004 243 709
US-A1- 2006 233 106**

- RUEDIGER MARTIN ET AL: "Accuracy and Dynamics of Hash-Based Load Balancing Algorithms for Multipath Internet Routing" BROADBAND COMMUNICATIONS, NETWORKS AND SYSTEMS, 2006. BROADNETS 2006. 3RD INTERNATIONAL CONFERENCE ON, IEEE, PI, 1 October 2006 (2006-10-01), pages 1-10, XP031155928 ISBN: 978-1-4244-0424-7

**Description**

The specification relates generally to server load balancing, and specifically to a method, system and apparatus for connecting a plurality of client machines to a plurality of servers.

Client machines send a wide variety of requests to service providers. In some cases, an incoming request at the service provider may be handled by one of several servers operated by the service provider. Multiple requests from a given computing device, however, are often disadvantageously distributed amongst different servers. If requests from a client machine are sent to different servers, the state information associated with that client machine is migrated to other servers, consuming additional bandwidth and computational resources. Hash-based load balancing schemes have been proposed, however these schemes work as long as the number of servers is substantially static. In practice the number of servers may change. For example, under various prior art methodologies, when a server fails, the load from all clients is remapped, often unnecessarily.

US 2003108052 A1 discloses a server load sharing system comprising a plurality of server load balancers and a relay device. Each balancer includes a module selecting, when receiving a forwarding target packet addressed to a predetermined virtual IP address via one of first and second links, any one of a plurality of load sharing target servers specified in their group on the basis of the virtual IP address and each allocated a unique IP address, and a module rewriting the virtual IP address of the received forwarding target packet addressed to the virtual IP address into the unique IP address of the selected server, and rewriting a source IP address of the received packet addressed to the virtual IP address into an IP address capable of specifying the other of the first and second links. The relay device connected to each of the plurality of balancers via the first and second links includes a module identifying the received packet addressed to the virtual IP address, and a module selecting one of the first and second links for forwarding the identified packet addressed to the virtual IP address to one of the plurality of balancers.

GENERAL

In one embodiment there may be provided a method for connecting a plurality of client machines to a plurality of servers; each of said servers having a unique server identifier, the method comprising: receiving a request from one of said client machines; receiving a unique client identifier for said one of said client machines; selecting a unique server identifier from said plurality of unique server identifiers, based on a mapping function comprising: said unique client identifier for said one of said client machines; and a state indicator for each of said servers; and connecting said one of said client machines to one of said servers corresponding to said selected unique server identifier.

In another embodiment there may be provided a computer readable storage medium containing computer readable instructions executable by a processor of a computing device for causing said computing device to perform the steps of a method described herein.

**BRIEF DESCRIPTIONS OF THE DRAWINGS**

Embodiments are described with reference to the following figures, in which:

Fig. 1 depicts a system for connecting client machines to servers, according to a non-limiting embodiment;

Fig. 2 depicts a load balancer of the system of Figure 1, according to a non-limiting embodiment;

Fig. 3 depicts a flowchart of a method for connecting client machines to servers, according to a non-limiting embodiment;

Fig. 4 depicts a tabular representation of a partial mapping function for the method of Fig. 3, according to a non-limiting embodiment;

Fig. 5 depicts a completed tabular representation of the mapping function of Fig. 4, according to a non-limiting embodiment;

Fig. 6 depicts a tabular enumeration of various required dimensions of the tabular representation of Fig. 5, according to a non-limiting embodiment;

Fig. 7 depicts a system for connecting client machines to servers, according to another non-limiting embodiment;

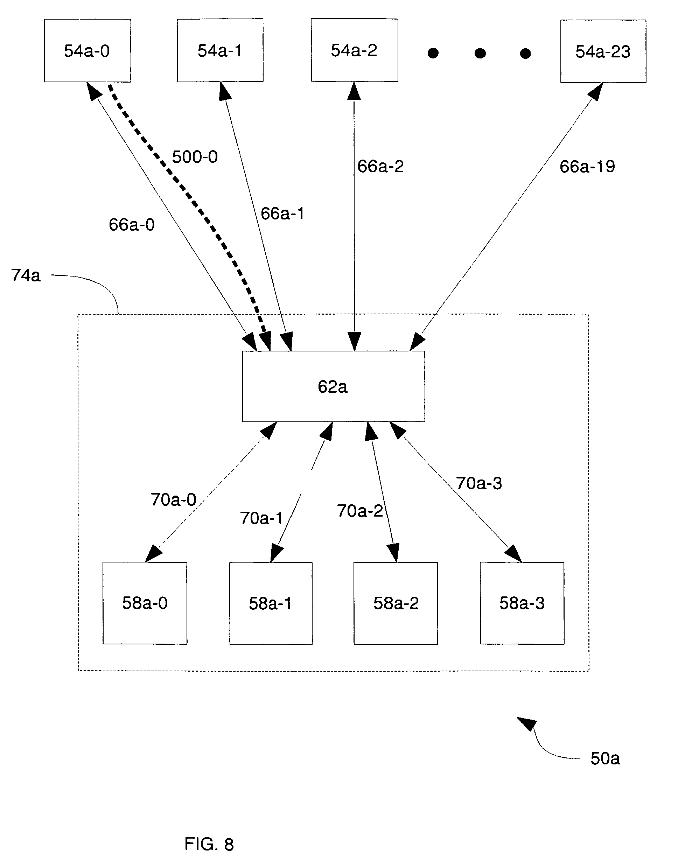

Fig. 8 depicts the performance of block 310 of the method of Fig. 3, according to a non-limiting embodiment;

Fig. 9 depicts a load balancer of the system of Figure 4, according to a non-limiting embodiment;

Fig. 10 depicts the performance of block 325 of the method of Fig. 3, according to a non-limiting embodiment;

Fig. 11 depicts a state transition diagram for the system of Fig. 4, according to a non-limiting embodiment;

Fig. 12 depicts a tabular representation of another mapping function, according to a non-limiting embodiment; and

Fig. 13 depicts a tabular representation of a comparison between the mapping functions of Fig. 5 and Fig. 12.

**DESCRIPTION OF PREFERRED EMBODIMENTS**

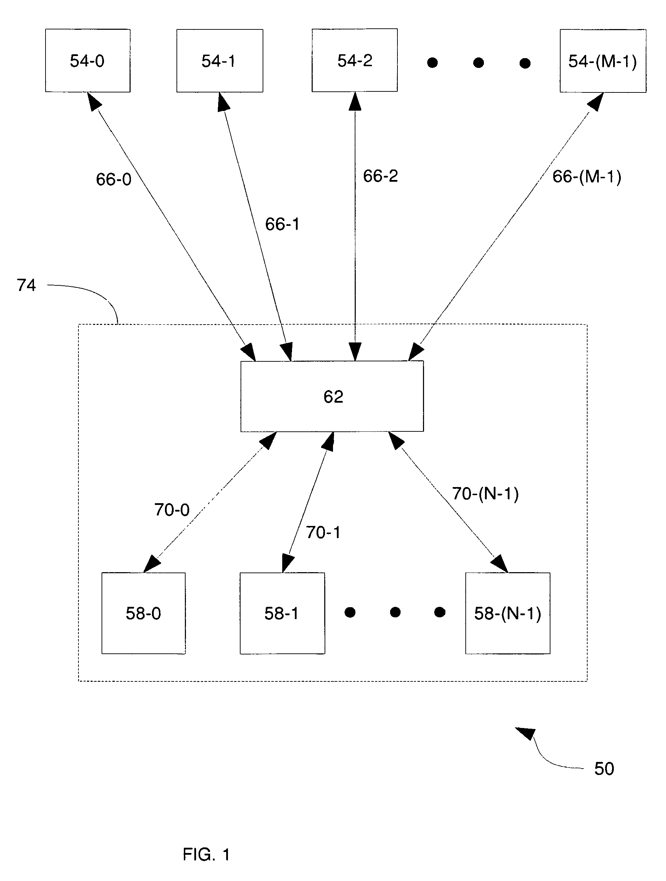

Referring now to Figure 1, a load-balancing scenario is presented with respect to a system indicated generally at 50. System 50 comprises a first plurality M of first computing devices in the form of client machines, indicated at 54-0, 54-1, 54-2 ... 54-(M-1) (generically referred to as a client machine 54 or a client machine 54-i, and collectively as client machines 54. This convention is used elsewhere herein). System 50 also comprises a second plurality N of second computing devices in the form of servers, indicated at 58-0, 58-1 ... 58-(N-1), where M can be much greater than N. Each server 58 is configured to be identified by a unique server identifier. In a present embodiment, for convenience and ease of explanation, the unique server identifier for each server 58 is taken to be the final digit of the reference numeral used herein to identify that server 58. For example, the unique server identifier of server 58-0 is "0." Other examples of unique server identifiers will occur to those skilled in the art, such as Internet Protocol ("IP") address, Media Access Control ("MAC") address, hardware serial number or any other unique machine identification, or any combination thereof. A load balancer 62 intercepts each request from each client machine 54, the request being transmitted via a link 66. Load balancer 62 then selects a server 58 to service that request, and forwards the request to the selected server 58 via the appropriate link 70. Servers 58 and load balancer 62 can be operated by a common service provider 74. Service provider 74 can, for example, host a website on servers 58, and can employ load balancer 62 to balance incoming Hypertext Transfer Protocol ("HTTP") requests among servers 58. It will be appreciated, however, that servers 58 and load balancer 62 can also be operated by any number of different entities.

Client machines 54 can be based on any known computing or electronic device environment including a processor, volatile memory (e.g. Random Access Memory ("RAM")), non-volatile memory (e.g. read only memory ("ROM"), Electrically Eraseable Programmable Read Only Memory ("EEPROM"), Flash Memory), input and output devices (e.g. keyboard, trackball, display) and communication interfaces for communicating over links 66 and 70 via wireless or wired connections. Client machines 54 may be, for example, cell phones, smart phones, desktop computers and the like.

Servers 58 may be based on any known server environment including a module that houses one or more central processing units, volatile memory, persistent memory (e.g. hard disk devices) and network interfaces to allow servers 58 to communicate over links 70 and 66.

It will be understood that the nature of links 66 which interconnect client machines 54 and load balancer 62, and links 70 which interconnect load balancer 62 and servers 58, is not particularly limited. Links 66 and 70 are based on any combination of architectures that will support interactions between client machines 54 and servers 58. For example, links 66 may be based on core mobile network infrastructure (e.g. Global System for Mobile communications ("GSM"); Code Division Multiple Access ("CDMA"); CDMA 2000; 3G; 4G) and may also include the Internet as well as appropriate gateways and backhauls. Links 70 may be based on a T1, T3 or any other suitable wired or wireless connection between load balancer 62 and servers 58.

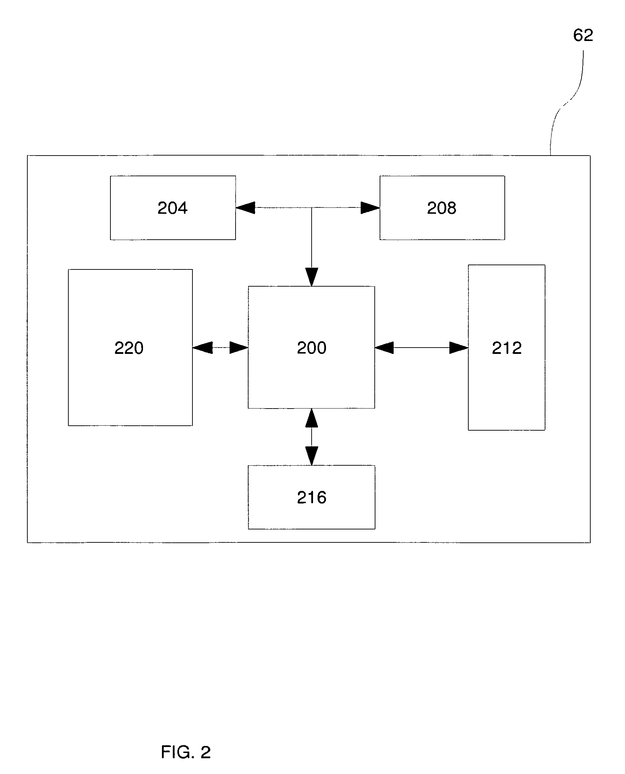

Referring now to Figure 2, a schematic block diagram shows load balancer 62 in greater detail. Load balancer 62 is configured to evenly distribute incoming requests from client machines 54 to the active ones of servers 58.

Load balancer 62 includes a processor 200 which communicates with a non-volatile storage unit 204 (e.g. read only memory ("ROM"), Electrically Eraseable Programmable Read Only Memory ("EEPROM"), Flash Memory) and a volatile storage unit 208 (e.g. random access memory ("RAM")). Processor 200 also communicates with a network interface 212 allowing load balancer 62 to communicate over links 66 and 70. Load balancer 62 may also include one or more input devices such as a keyboard 216, and one or more output devices such as a display 220. It will be understood that the structure depicted in Figure 2 is purely exemplary. For example, in some embodiments (not shown) load balancer 62 may include a plurality of processors. In some embodiments, load balancer 62 may additionally include a plurality of network interfaces, or may also include further input devices such as a mouse, a microphone and the like.

Computer readable code embodying programming instructions that implement the functional teachings of load balancer 62 as described herein are typically maintained in a computer readable storage medium, for example in non-volatile storage unit 204, and used by processor 200 which makes appropriate utilization of volatile storage unit 208 during the execution of such programming instructions.

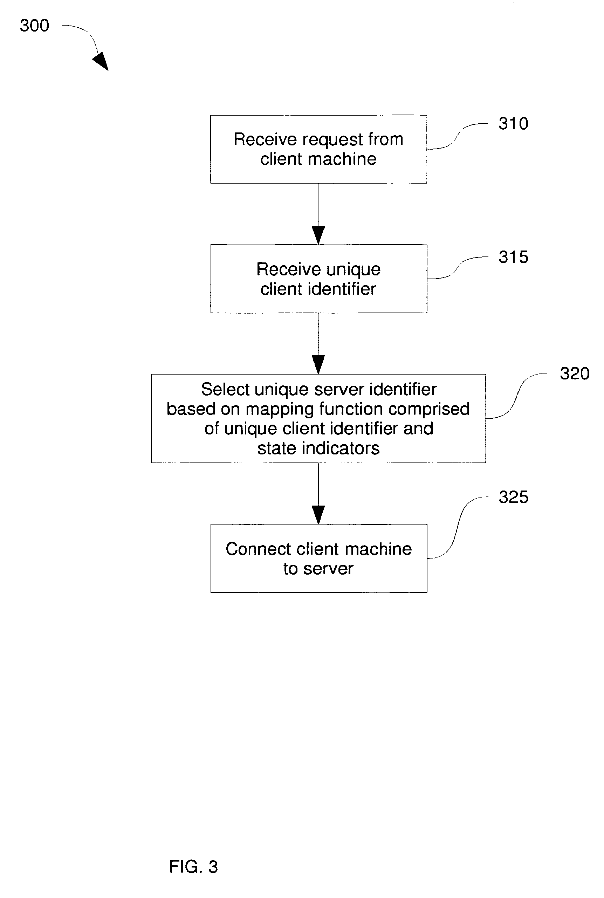

Referring now to Figure 3, a flow chart is provided depicting a method, indicated generally at 300, for connecting a plurality of client machines to a plurality of servers. Method 300 will be described in conjunction with system 50. It will be understood, however, that both system 50 and method 300 may be varied and such variations are within the scope of the present teachings.

In general, method 300 begins at block 310 with the receipt of a request at load balancer 62. The request originates from a client machine 54 and is destined for service provider 74. For example, the request may be a request to view a portion of a web page hosted by service provider 74 on servers 58.

Method 300 continues at block 315 with the receipt of a unique client identifier at load balancer 62. In a present embodiment, for convenience and ease of explanation, the unique client identifier of a given client machine 54 is taken to be the reference numeral used to identify that client machine 54 in the drawings. For example, the unique client identifier of client machine 54-0 in Figure 1 is "54-0." Other examples of unique client identifiers will occur to those skilled in the art, such as IP address, MAC address, hardware serial number or any other unique machine identification, or any combination thereof. The unique client identifier can be obtained from the request received at block 310, and thus block 310 and block 315 can be performed substantially simultaneously. In a present embodiment, performance of block 315 also includes the generation of a hashed unique client identifier at load balancer 62. The hashed unique client identifier can be an integer value generated on the basis of a hash of the unique client identifier of the client machine 54. For example, for the case of an IP address as a unique client identifier, given a request from a particular client machine 54-i, a hashed unique client identifier may be generated by hashing the IP address of that client machine 54-i:

$$ hash = h(addr_{54-i}) $$

where h() is a suitably constructed hash function. For the case of an IP address as a unique client identifier, the hash function can, for example, simply compute the sum of the bytes comprising the IP address, although many other hash functions will occur to those skilled in the art. For example, the hash function h() may be computed over the source (client machine 54-i) and destination IP addresses and ports. It will be appreciated that in other embodiments (not shown), the hashed unique client identifier may be received at load balancer 62 as part of the received request. In other words, the hashed unique client identifier may be determined by the originating client machine 54 or an intermediate network component. In still other embodiments (not shown) the unique client identifier can be used for the remainder of method 300, and the generation of a hashed unique client identifier can be foregone.

Method 300 continues at block 320. At block 320 a unique server identifier is selected at load balancer 62. The selected unique server identifier corresponds to an active one of servers 58 for servicing the request received at block 310. The unique server identifier is selected based on a mapping function. In order to allow for servers 58 to be added and removed (that is, to change states between active and inactive), the mapping function is comprised of both (a) the hashed unique client identifier (generated at block 315) of the client machine 54-i which originated the request, and (b) a state indicator for each server. It will be noted that in other embodiments, the mapping function can be comprised of the unique client identifier rather than the hashed unique client identifier. The state indicator provides an indication of whether a given server is active or inactive. An active server, as will now be appreciated by those skilled in the art, is able to service requests from client machines 54, while an inactive server is not able to service such requests. In a present embodiment, the state indicators for servers 58 are contained within a bit vector representing the set of active ones of servers 58.

The bit vector can be defined as follows:

$$ B = b_{N-1}b_{N-2}\cdots b_2 b_1 b_0 $$

where $b_i$ is "1" if server 58-i is active; "0" if server 58-i is inactive. The state indicators are maintained in volatile storage unit 204 or non-volatile storage unit 208 of load balancer 62. It will be appreciated that the state indicators may be updated in a variety of ways. For example, load balancer 62 may poll servers 58 at certain intervals. If no response is received from a particular server 58 within a predefined time period, the state indicators maintained in memory at load balancer 62 may be updated to indicate that that server 58 is inactive. As another example, in a present embodiment each server 58 periodically transmits a message to load balancer 62. So long as such messages continue to be received from a given server 58, the state indicator maintained at load balancer 62 for that server 58 indicates activity. If no messages are received from a given server 58 for a predetermined amount of time, the state indicator for that server 58 is updated to indicate inactivity. In a present embodiment in which state indicators are contained within the above-mentioned bit vector, the bit vector would therefore be updated to provide a 0 in the bit corresponding to that particular server 58.

Thus, in the present embodiment, given a request from a client machine 54, a unique server identifier is generally selected as follows at block 320 of method 300:

$$ server = g(hash, B) $$

where g() is a suitably constructed mapping function.

The mapping function g() is constructed to allow load balancer 62 to distribute the load represented by incoming requests from client machines 54 substantially evenly across all the active ones of servers 58. As a general example, there may be from 1 to N active servers 58. This has implications for the range of the hash function h(), or any other function used to generate hashed unique client identifiers. It will be understood that in order to balance the load over two servers 58, the range of hash function h() is a multiple of two; to balance the load over three servers 58, the range of hash function h() is a multiple of three; and so on. It follows that in order to balance the load over N servers 58 as depicted in Figure 1, the range of hash function h() is a multiple of N. Therefore, the smallest possible range for the hash function h() can be defined as the least-common multiple of the first N integers, $lcm(1,2,\cdots,N)$. Thus, for a request received from a client machine 54-i at load balancer 62, a suitable mapping function can be generally formulated as:

$$server = g(h(addr_{54-i}) \mod(lcm(1,2,\cdots,N),B)$$

The mapping function g() is constructed in a way that provides the "stickiness," or consistency, property. That is, requests from a given client machine 54 substantially result in the same unique server identifier selection (that is, are substantially mapped to the same one of servers 58). The following illustrates how such a mapping function can be constructed.

For this exemplary construction of a mapping function g(), it is assumed that N = 4. That is, system 50 includes four servers 58, any one of which may be active or inactive. The range of the hash function is therefore $lcm(1,2,3,4)$ =12 and there are 15 valid combinations of state indicators represented by the bit vector B that represents the set of active ones of servers 58. (The case where all servers are inactive - that is, the case where $B$ = 0000 - is not valid since no load balancing can be conducted if there are no active servers for servicing requests 58 at service provider 74. Construction of the exemplary mapping function g() in tabular format will first be described.

A tabular representation of the mapping function g() is constructed as follows. The table has twelve rows (one for each value of the range of the hash function h()) and fifteen columns (one for each value of the bit vector B containing a state indicator for each server 58).

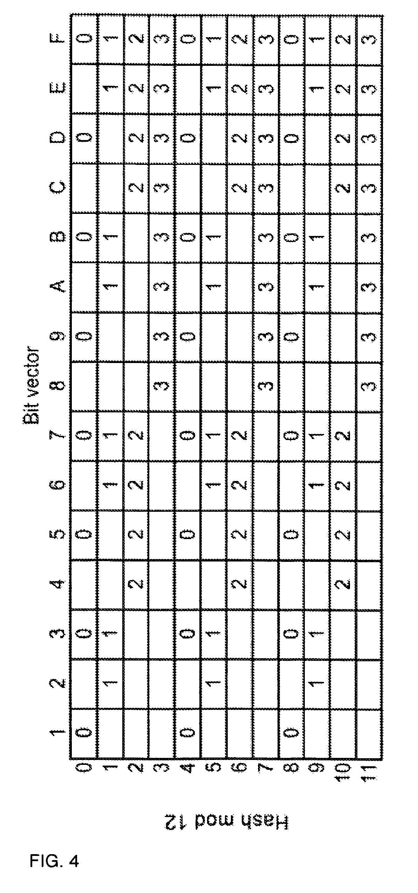

Figure 4 shows the first step in the construction of the mapping function. Construction begins in the right-most column which corresponds to all servers active - that is, where $B$=1111, or a hexadecimal value of "F." This column is completed in by assigning the rows in round-robin fashion to each of the servers 58, indicating which server 58 a given row is assigned to by way of the corresponding unique server identifier (0,1,2 or 3).

Each of the remaining columns in the table of Figure 4 is partially completed by copying the unique server identifiers from the right-most column (column F) corresponding to the active server(s) 58 in the given column. For example, column E corresponds to the case where servers 58-1, 58-2, and 58-3, are active while server 58-0 is inactive - that is, where $B$=1110. Thus, column E is partially completed by copying the unique server identifiers "1," "2," and "3" from the right-most column. The unique server identifier "0" is not inserted into column E, as in the situation represented by column E, server 58-0 is inactive and cannot service requests. Thus, rows 0, 4 and 8 are not yet assigned a unique server identifier.

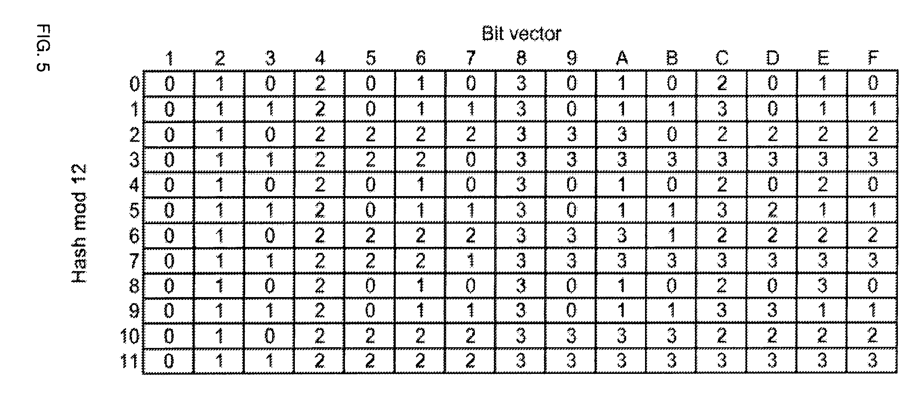

Figure 5 shows the second step in the construction of the mapping function. In the second step, the remaining entries are filled one column at a time. In each column the entries are filled by assigning unique server identifiers for the active ones of servers 58 in round-robin fashion.

For example, consider column E. The active ones of servers 58 are servers 58-1, 58-2, and 58-3. Unique server identifiers 1, 2 and 3 (corresponding to servers 58-1, 58-2 and 58-3) are therefore assigned in round-robin fashion to rows 0, 4, and 8 of column E. The effect of assigning the remaining rows to active ones of servers 58 in round-robin fashion is to substantially balance the load on the active ones of servers 58.

As can be seen from the completed tabular mapping function represented in Figure 5, the three rows (0, 4 and 8) of column E which would have been assigned to unique server identifier 0 if all servers 58 were active, as in column F, are instead assigned evenly among unique server identifiers 1, 2 and 3, corresponding to active servers 58-1, 58-2 and 58-3.

An exemplary C program fragment will now be described for providing the above-described tabular mapping function g(). The program fragment represents a method for connecting a plurality of first client machines to a plurality of servers, and is provided below with numbered lines for later reference.

```
unsigned g(unsigned hash, unsigned N, unsigned mask,
    unsigned L, unsigned zeroes, unsigned ones,
    unsigned* active, unsigned* adjust)
{
    unsigned result = 0;
    unsigned row = hash % L;
    unsigned group = row / N;
```

```
    unsigned offset = row % N;
    if (mask & (1 << offset))
        {
        result = offset;
        }
    Else
        {
            result = active[(group * zeroes + adjust[offset]) %
    ones];
        }
        return result;
    }
```

The inputs to the program fragment are as follows:

An integer variable, *hash*, that contains a hashed unique client identifier as described above.

An integer variable, *N*, that represents the number of servers 58 included in system 50. It will be noted that this number N therefore indicates the maximum number of active servers 58 in system 50. It is assumed in a present embodiment that *N* is a constant.

An integer variable, *mask,* that is a bit vector containing a status indicator for each server 58, and thereby represents the set of active ones of servers 58.

An integer variable, *L*, that contains the least-common multiple of the first *N* integers. It will be noted that in a present embodiment, since *N* is a constant, so too is *L*. Therefore, *L* need be computed only once.

An integer variable, *zeroes,* that contains the number of zeroes in the bit vector. More generally, *zeroes* contains a count of the number of status indicators indicating inactivity on the part of their respective servers 58. Thus, the number of zeroes is equal to the number of inactive ones of servers 58. This value can be generated from the bit vector *mask* at every performance of the method represented by the program fragment. However, as with *mask,* the value of *zeroes* is subject to change when the active ones of servers 58 change. Therefore, in a present embodiment the value of *zeroes* is regenerated when the active ones of servers 58 change.

An integer variable, *ones*, that contains the number of ones in the bit vector. More generally, *ones* contains a count of the number of status indicators indicating activity on the part of their respective servers 58. Thus, the number of ones is equal to the number of active ones of servers 58. This value can be generated from the bit vector mask at every performance of the method represented by the program fragment. However, as with mask and zeroes, the value of ones is subject to change when the active ones of servers 58 change. Therefore, in a present embodiment the value of ones is regenerated when the active ones of servers 58 change.

An array of integers, active, whose length is equal to the number of active ones of servers 58 and that contains the unique server identifiers corresponding to the active ones of servers 58. The array active can be generated from the bit vector mask at every performance of the method represented by the program fragment. However, as discussed above the contents of active is subject to change when the active ones of servers 58 change. Therefore, in a present embodiment the value of active is regenerated when the active ones of servers 58 change.

An array of integers, adjust, of length N that contains values computed as follows. The ith element of the array contains a count of the number of zeroes in the least significant i-1 bits of the bit vector, mask. The array adjust can be generated from the bit vector mask at every performance of the method represented by the program fragment. However, as discussed above, the contents of adjust is subject to change when the active ones of servers 58 change. Therefore, in a present embodiment the value of adjust is regenerated when the active ones of servers 58 change.

It will now be apparent that the running time of this program fragment is O(1). When the active ones of servers 58 change (that is, when one or more servers 58 that were previously active become inactive, or vice versa), the values of mask, zeroes, ones, active, and adjust are regenerated at load balancer 62. These values can be regenerated in O(N) time (where N is the number of servers 58 included in system 50). The values of mask, zeroes, ones, active, and adjust require O(N) storage (where N is the number of servers 58 included in system 50).

Following the above description of the exemplary mapping function g(), it will now become apparent that either of the tabular or algorithmic approaches may be used. In particular, for some values ofN the entire mapping function g() may be computed and stored by load balancer 62 in a table, for example in non-volatile storage unit 208. Such a tabular format may be dynamically constructed as described above with respect to Figures 4 and 5, or may be constructed by computing the above-discussed algorithm for each row using all values of the bit vector, *mask.* The time required to select a unique server identifier in such a case is always O(1) because all that is required is a table lookup. No additional computation is required when the active ones of servers 58 change.

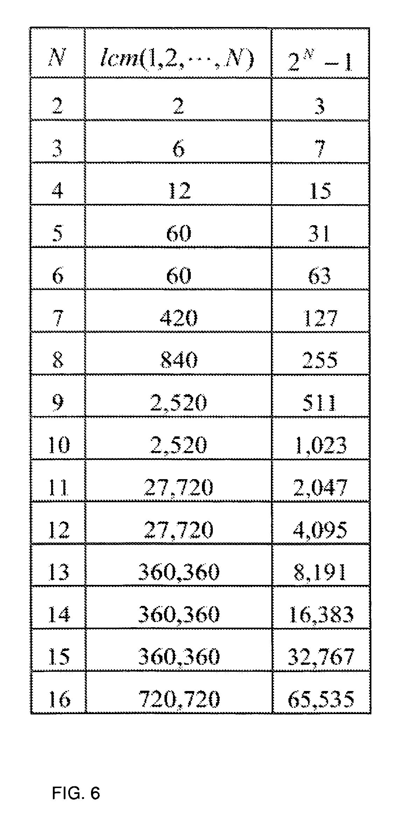

When the mapping function g() is stored at load balancer 62 in a tabular format as described above, the size of the table required is $lcm(1,2,\cdots,N) \times (2^N - 1)$. Figure 6 provides a table enumerating the required table dimensions for various values of N.

Following the selection of a unique server identifier at block 320, method 300 continues at block 325. At block 325, load balancer 62 connects the client machine 54 which originated the request with the server 58 corresponding to the unique server identifier selected at block 320. In the present embodiment, load balancer 62 forwards the request to the server 58 corresponding to the selected unique server identifier, completing the performance of block 325.

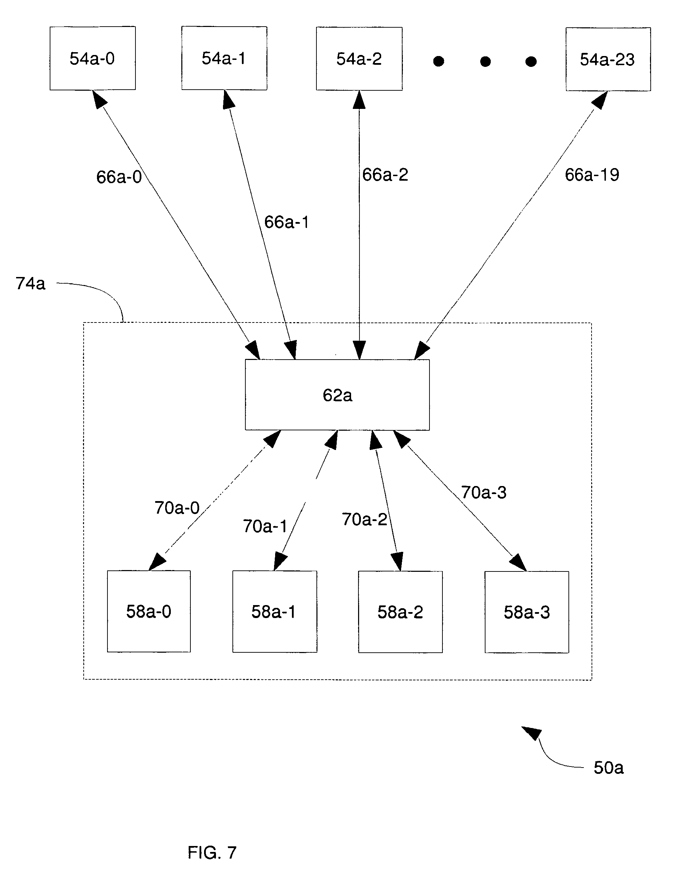

By way of further explanation, an exemplary performance of method 300 will now be described in connection with a system 50a, depicted in Figure 7. Where system 50a includes like components to those of system 50, those components are identified by the same reference numerals as in Figure 1, with the addition of a suffix "a." It will be noted from Figure 7 that system 50a includes four servers 58a and twenty-four client machines 54a. Thus, the value of the least common multiple L as described above is twelve. For this exemplary performance of method 300, it will be assumed that servers 58a-0, 58a-2 and 58a-3 are active, while server 58a-1 is inactive. Link 70a-1 has been severed to indicated the inactivity of server 58-1. Thus, the state indicators for servers 58a may be represented in the form of a bit vector, *mask*, as follows:

$$mask = 1101$$

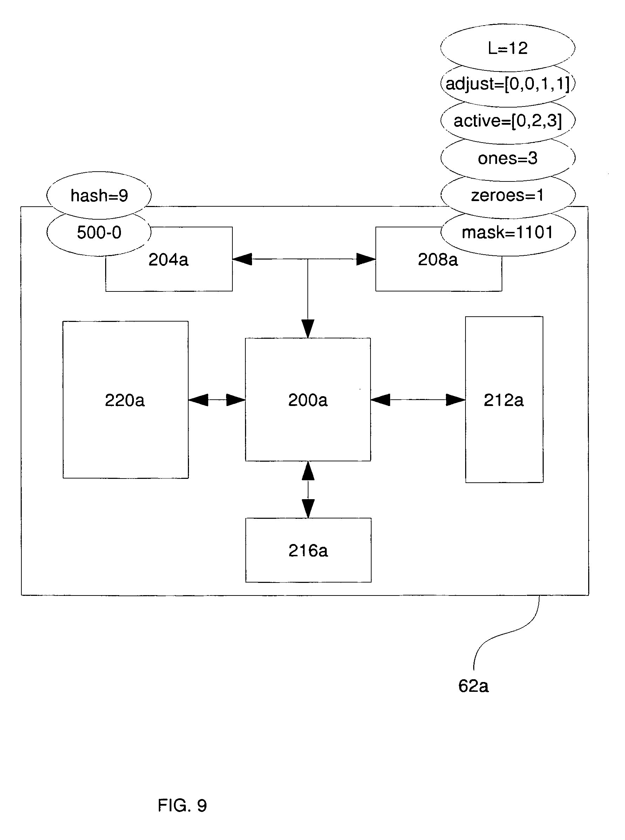

The state indicators may be stored by load balancer 62a, for example in non-volatile storage unit 208a, as shown in Figure 9.

It will be appreciated that as a result of the above value of *mask,* the following values of inputs, which may also be stored by load balancer 62a, to the program fragment described earlier are as follows:

$$mask = 1101$$

$$zeroes = 1$$

$$ones = 3$$

$$active = [0,2,3]$$

$$adjust = [0,0,1,1]$$

[Method 300 begins at block 310 with the receipt of a request from client machine 54a-0. Performance of block 310 is depicted at Figure 5, where a request 500-0 originates from client machine 54a-0. Request 500-0 is associated with service provider 74a, and is thus received at load balancer 62a. As shown in Figure 6, request 500-0 may be stored at load balancer 62a, for example in volatile storage unit 204a.

Returning to Figure 3, performance of method 300 continues at block 315 with the receipt of a unique client identifier and the generation of a hashed unique client identifier at load balancer 62a. As described earlier, the unique client identifier will be taken as the reference numeral "54a-0" for client machine 54a-0 from Figure 7, for the purposes of explanation. In this exemplary performance of method 300, the hashed unique client identifier is generated from the sum of the digits (that is, "5," "4," and "0") in the unique client identifier. Therefore, load balancer 62a is configured in a present embodiment to determine the hashed unique client identifier via the following hash function h():

$$hash = h(54a - 0) = 5 + 4 + 0 = 9$$

Once generated at block 315, the hashed unique client identifier may be stored by load balancer 62a, for example in volatile storage unit 204a, as shown in Figure 9.

Referring again to Figure 3, method 300 continues at block 320 with the selection of a unique server identifier based on the mapping function g(), comprised of the state indicators stored by load balancer 62a, and the hashed unique client identifier also stored by load balancer 62a. In the present embodiment, load balancer 62a selects a unique server identifier by executing, at processor 200a in conjunction with computer readable instructions stored at non-volatile storage unit 208a, the program fragment described above. It will be understood that processor 200a makes use, as necessary, of non-volatile storage unit 208a and volatile storage unit 204a during the execution of the program fragment. For example, intermediate values calculated in the course of execution may be stored in volatile storage unit 204a.

In particular, line 6 of the program fragment results in the generation of the value "row" as follows: $row = hash\ mod\ L$ = 9 mod 12 = 9. Similarly, at lines 7 and 8, the values "group" and "offset" are generated as follows:

$$group = \text{int}(row / N) = \text{int}(9 / 4) = 2$$

$$offset = row \bmod N = 9 \bmod 4 = 1 .$$

At line 9 of the program fragment, the result of ($mask$ & (1 << offset)) is 1101 & 0010 = 0000 = $FALSE$. Therefore, execution of the program fragment proceeds to line 15, where a unique server identifier is selected as follows:

$$result = active[(2 * 1 + 0) \bmod 3] = active[2 \bmod 3] = active[2] = 3$$

Thus, the unique server identifier selected at block 320 is 3, corresponding to server 58a-3. It will be noted that the same result can be achieved in other embodiments (not shown) where load balancer 62a maintains in memory a table as shown in Figure 5. In these other embodiments, a unique server identifier is selected by processor 200a of load balancer 62a from the column corresponding to a bit vector value of "1101", or hexadecimal "D," and from the row corresponding to a value of $hash$ mod $L$ = 9 mod 12 = 9. As seen in Figure 5, the unique server identifier provided at column D and row 9 is "3," corresponding to server 58a-3.

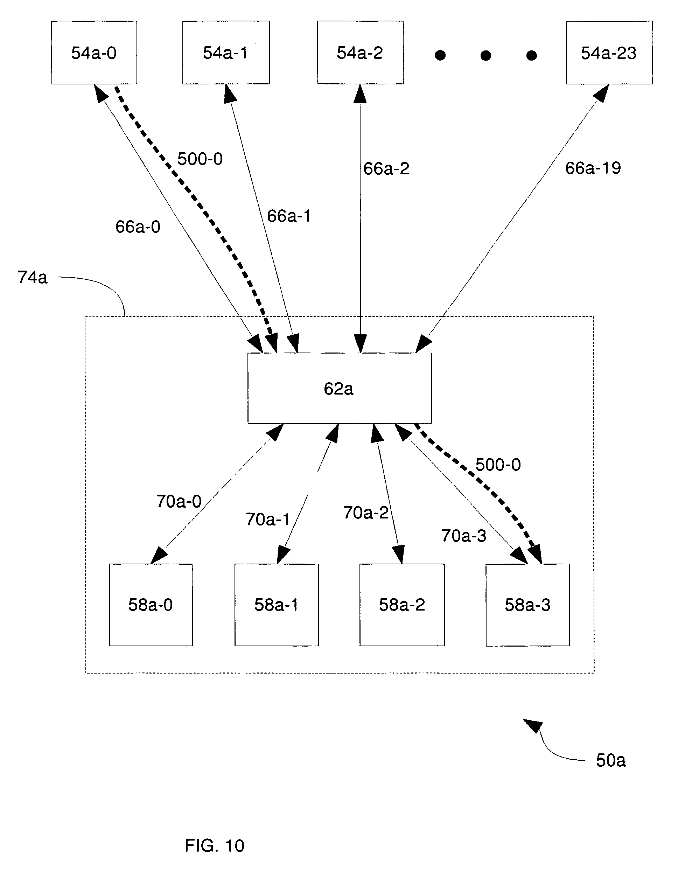

Performance of method 300 continues with the connection of client machine 54a-0 and server 58a-3 at block 325. Performance of block 325 is depicted at Figure 10, where request 500-0 is forwarded by load balancer 62a to server 58a-3 for servicing.

From the above description of the present embodiment, certain advantages will now be apparent. For example, the above mapping function substantially satisfies a stickiness, or consistency, property. That is, multiple requests from a given client machine 54 substantially result in the selection of the same unique server identifier, as long as the corresponding server 58 is active. To evaluate the quality of the mapping function with respect to stickiness, all server activation states are enumerated, and for each state, all possible state transitions resulting from the addition or removal of a single server 58 are considered.

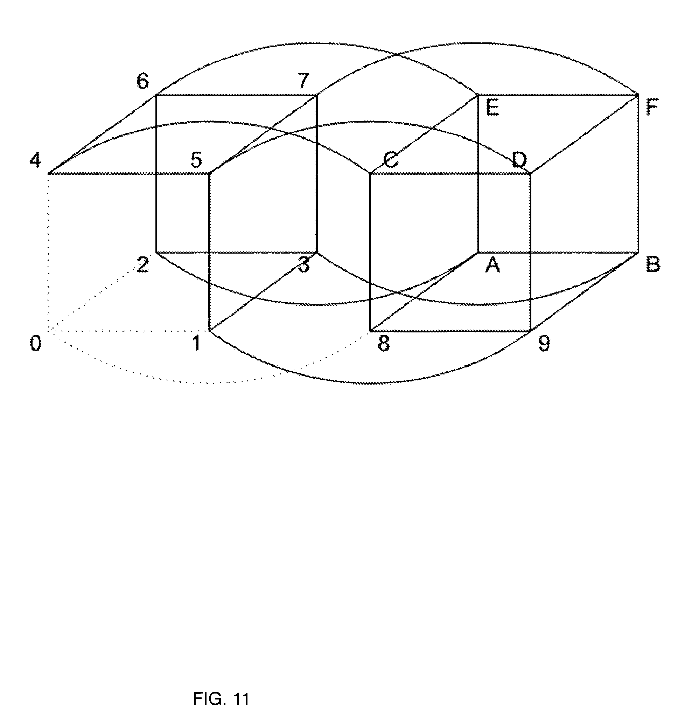

Figure 11 illustrates that the states and state transitions for N servers 58 forms an N -dimensional hypercube (with the exception of state "0" which is not valid and is therefore indicated in dashed lines). The set of servers 58 active in adjacent states in the hypercube differ by exactly one server 58. In general, there are $N(2^N -1)$ transitions (with the "0" state and associated transitions removed). For example, for N = 4 there are twenty-eight transitions as shown in Figure 11.

For each transition between a state "i" and a state "j", the corresponding columns of the tabular mapping function representation in Figure 5 are compared, and the number of rows in which the unique server identifiers are different is counted. These correspond to client machines 54 which are remapped as a result of the activation or deactivation of a server 58 to which requests from such client machines 54 were previously assigned.

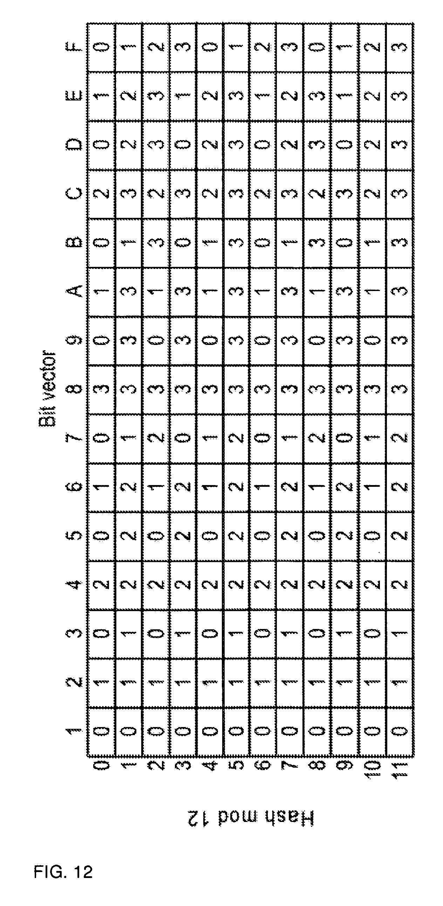

For the purpose of the above-described comparison, a tabular representation of a modular hash-based mapping function was constructed (see Figure 12).

For the above mapping function, a hashed unique client identifier is generated as described above. The hashed unique client identifier is then mapped to a number in the range [0, N-1] to select a unique server identifier using modular arithmetic:

$$g(hash) = hash \bmod N$$

Note that in Figure 12, unique server identifiers for active ones of servers 58 are assigned to rows in round-robin fashion.

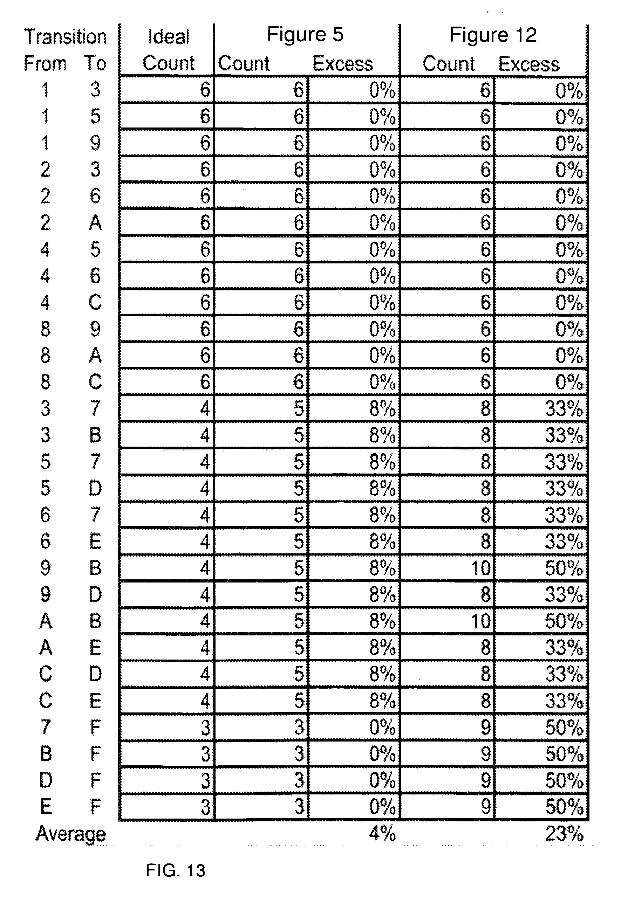

Figure 13 shows the results of the analysis. The table shows, for each possible transition between columns in Figure 5 and 12, the number of rows that change as a result of the transition. The fraction of rows that change represents the fraction of clients that experience a change in server assignment as a result of the transition.

Figure 13 shows three cases: The first represents a hypothetical ideal in which the minimum number of rows are remapped as the result of the transition. The second case represents the performance of the mapping function described above and represented in Figure 5. The third represents the modular hash-based mapping function represented in Figure 12.

Averaged over all possible transitions, the mapping function represented in Figure 5 remaps 4% of client machines 54 unnecessarily relative to the ideal case. By comparison the modular hash-based mapping function represented in Figure 12 remaps 23% of the clients unnecessarily.

Additionally, the preceding analysis assumes that all transitions are equally likely. In fact, in realistic scenarios the mapping function represented in Figure 5 has greater stickiness than the modular hash-based mapping function represented in Figure 12. For example, in the cases where there are initially 4 servers 58 active and only single server 58 failures are considered (i.e., double and triple failures are ignored), there are only four possible transitions (7-F, B-F, D-F, and E-F of Figure 13). The average excess for the mapping function represented in Figure 5 is 0% and in all cases the excess for the mapping function represented in Figure 12 is 50%. In other words, the mapping function described above in conjunction with method 300 and represented in Figure 5 is ideal; whereas in the mapping function represented in Figure 12, half of the client machines 54 are remapped unnecessarily as a result of a server 58 failure.

Other advantages will also occur to those skilled in the art. For example, load balancer 62 does not need to maintain a per-client state, and thus reduces consumption of storage and computational resources. It will be understood that the above advantages are merely exemplary, and that other advantages may also be achieved in the present or other embodiments.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

**Claims**

**1.** A method for connecting a plurality of client machines (54) to a of servers (58); each of said servers (58) having a unique server the method comprising:

receiving a request (3 10) from one of said client machines (54);
receiving a hashed unique client identifier (315) for said one of said client machines (54), wherein said hashed unique client identifier is a hash comprising at least a unique client identifier corresponding to one of said client machines;
selecting a unique server identifier (320) from said plurality of unique server identifiers, based on a mapping function configured to select the one of said unique server identifiers for a given client machine as long as the server corresponding to said one of said unique server identifiers is active, the mapping function comprising:

*Hash* mod *L*, where *Hash* is said hashed unique client identifier and *L* is a least-common-multiple of the first *N* integers, where *N* is a count of said plurality of servers (58); and
a value representative of state indicators for each of said servers (58); and

connecting said one of said client machines (54) to one of said servers (58) corresponding to said selected unique server identifier.

**2.** The method of claim 1, wherein said state indicator for each of said servers (58) is '1' and is '0' if inactive.

**3.** The method of claim 2, further comprising:

maintaining a bit vector 'B' containing said state indicators, said bit vector 'B' being defined according to $B = b_{N-1}b_{N-2} \cdots b_2b_1b_0$, where $b_i$ is a state indicator for an *i*th server (58) of said plurality of servers (58).

**4.** method of any one of claims 1 to 3, further comprising:

receiving said unique client identifier;
wherein receiving said hashed unique client identifier comprises generating said hashed unique client identifier.

5. The method of any one of claims 1 to 4, wherein connecting said one of said client machines (54) to said one of said servers (58) corresponding to said selected unique server identifier comprises:

   forwarding said request to said one of said servers (58) corresponding to said selected unique server identifier.

6. The of any one of claims 1 to 5, wherein said unique client identifier comprises at least one of an internet protocol 'IP' address of said client machine (54) and a media access control 'MAC' address of said client machine (54).

7. The method of claim 6, wherein said hashed unique client identifier further comprises at least one of an additional IP address an additional MAC address.

8. A server (62) configured to perform the steps of the method of any one of claims 1 to 7.

9. A computer readable storage medium containing computer readable instructions executable by a processor (200) of a computing for causing said computing device to perform the steps of the method of one of claims 1 to 7.

**Patentansprüche**

1. Verfahren zum Verbinden einer Vielzahl von Client-Maschinen (54) mit einer Vielzahl von Servern (58); wobei jeder der Server (58) einen eindeutigen Server-Identifizierer hat, wobei das Verfahren aufweiset:

   Empfangen einer Anforderung (310) von der Client-Maschinen (54);
   Empfangen eines mit einem Hash versehenen eindeutigen Client-Identifizierers (315) für die-eine der Client-Maschinen (54), wobei der mit einem Hash versehene eindeutige Client-Identifizierer ein Hash ist, der zumindest einen eindeutigen Client-Identifizierer aufweist, der der einen der Client-Maschinen entspricht;
   Auswählen eines eindeutigen Server-Identifizierers (320) a us der Vielzahl von eindeutigen Server-Identifizierern, basierend auf einer Abbildungs-Funktion, die konfiguriert ist zum Auswählen desselben der eindeutigen Server-Identifizierer für eine gegebene Client-Maschine, solange der Server, der dem einen der eindeutigen Server-Identifizierer entspricht, aktiv ist,
   wobei die Abbildungs-Funktion aufweist:

   $Hash$ mod $L$, wobei $Hash$ der mit einem Hash versehene eindeutige Client-Identifizierer ist und $L$ ein kleinstes gemeinsames Vielfaches der ersten $N$ Ganzzahlen ist, wobei $N$ eine Anzahl der Vielzahl von Servern (58) ist; und
   einen Wert, der für Zustandsindikatoren für jeden der Server (58) repräsentativ ist; und

   Verbinden der einen der Client-Maschinen (54) mit einem der Server (58) entsprechend dem ausgewählten eindeutigen Server-Identifizierer.

2. Verfahren gemäß Anspruch 1, wobei der Zustandsindikator für jeden der Server (58) 1 ist, wenn aktiv, und 0 ist, wenn inaktiv.

3. Verfahren Anspruch 2, das weiter aufweist:

   Führen eines Bitvektors B, der die Zustandsindikatoren enthält, wobei der Bitvektor B definiert wird gemäß $B = b_{N-1}b_{N-2}...b_2b_1b_0$, wobei $b_i$ ein Zustandsindikator für einen i-ten Server (58) a us der Vielzahl von Servern (58) ist.

4. Verfahren einem der Ansprüche 1 bis 3, das weiter aufweist:

   Empfangen des eindeutigen Client-Identifizierers;
   wobei das Empfangen des mit einem Hash versehenen eindeutigen Client-Identifizierers ein Erzeugen des mit einem Hash versehenen eindeutigen Client-Identifizierers aufweist.

5. Verfahren gemäß einem der Ansprüche 1 bis 4, wobei das Verbinden der einen der Client-Maschinen (54) mit dem einen der Server (58) entsprechend dem ausgewählten eindeutigen Server-Identifizierer aufweist:

Weiterleiten der Anforderung an den einen der Server (58) entsprechend dem ausgewählten eindeutigen Server-Identifizierer.

**6.** Verfahren gemäß einem der Ansprüche 1 bis 5, wobei der eindeutige Client-Identifizierer zumindest eines aus einer Internetprotokoll(IP - internet protocol)-Adresse der Client-Maschine (54) und einer MAC(media access control)-Adresse der Client-Maschine (54) aufweiset.

**7.** Verfahren gemäß Anspruch 6, wobei der mit einem Hash versehene eindeutige Client-Identifiziere weiter zumindest eine aus einer zusätzlichen IP-Adresse und einer zusätzlichen MAC-Adresse aufweiset.

**8.** Server (62), der konfiguriert ist zum Durchführen der Schritte des Verfahrens gemäß einem der Ansprüche 1 bis 7.

**9.** Computerlesbares Speichermedium, das computerlesbare Anweisungen enthält, die durch einen Prozessor (200) einer Computervorrichtung ausführbar sind, um die Computervorrichtung zu veranlassen, die Schritte des Verfahrens gemäß einem der Ansprüche 1 bis 7 durchzuführen.

**Revendications**

**1.** Procédé de connexion de plusieurs postes clients (54) à plusieurs serveurs (58) ; chacun desdits serveurs (58) ayant un identifiant unique de serveur, le procédé comprenant le fait :

de recevoir une requête (310) de l'un desdits postes clients (54) ;
de recevoir un identifiant haché unique de client (315) pour ledit un poste client parmi lesdits postes clients (54), où ledit identifiant haché unique de client est un hachage comprenant au moins un identifiant unique de client correspondant audit poste client parmi lesdits postes clients ;
de sélectionner parmi ladite pluralité d'identifiants uniques de serveurs, un identifiant unique de serveur (320) sur la base d'une fonction de mise en correspondance configurée pour sélectionner le même identifiant parmi lesdits identifiants de serveurs uniques pour un poste client donné tant que le serveur correspondant audit identifiant parmi lesdits identifiants de serveurs uniques est actif, la fonction de mise en correspondance comprenant :

$Hash$ mod $L$, où $Hash$ est ledit identifiant haché unique de client et $L$ est le plus petit commun multiple des premiers entiers $N$, où $N$ est un décompte de ladite pluralité de serveurs (58) ; et
une valeur représentant des indicateurs d'état pour chacun desdits serveurs (58) ; et

de connecter ledit poste parmi desdits postes clients (54) à l'un desdits serveurs (58) correspondant audit identifiant unique de serveur sélectionné.

**2.** Procédé de la revendication 1, dans lequel ledit indicateur d'état pour chacun desdits serveurs (58) vaut '1' si le serveur est actif et vaut '0' si le serveur est inactif.

**3.** Procédé de la revendication 2, comprenant en outre le fait :

de maintenir un vecteur de bits 'B' contenant lesdits indicateurs d'état, ledit vecteur de bits 'B' étant défini selon $B = b_{N-1}b_{N-2}...b_2b_1b_0$, où $b_1$ est un indicateur d'état pour un $i^{ème}$ serveur (58) de ladite pluralité de serveurs (58).

**4.** Procédé de l'une quelconque des revendications 1 à 3, comprenant en outre le fait :

de recevoir ledit identifiant unique de client ;
où la réception dudit identifiant haché unique de client comprend la génération dudit identifiant haché unique de client.

**5.** Procédé de l'une quelconque des revendications 1 à 4, dans lequel la connexion dudit poste client parmi lesdits postes clients (54) audit serveur parmi lesdits serveurs (58) correspondant audit identifiant unique de serveur sélectionné comprend le fait :

d'envoyer ladite requête audit serveur parmi ladite pluralité de serveurs (58) correspondant audit identifiant unique de serveur sélectionné.

6.  Procédé de l'une quelconque des revendications 1 à 5, dans lequel ledit identifiant de client unique comprend au moins l'une parmi une adresse 'IP' de protocole Internet dudit poste client (54) et d'une adresse 'MAC' de contrôle d'accès au support dudit poste client (54).

7.  Procédé de la revendication 6, dans lequel ledit identifiant haché unique de client comprend en outre au moins l'une d'une adresse IP supplémentaire et d'une adresse MAC supplémentaire.

8.  Serveur (62) configuré pour réaliser les étapes du procédé de l'une quelconque des revendications 1 à 7.

9.  Support de stockage lisible par ordinateur contenant des instructions lisibles par ordinateur exécutables par un processeur (200) d'un dispositif informatique pour amener ledit dispositif informatique à réaliser les étapes du procédé de l'une quelconque des revendications 1 à 7.

FIG. 1

62

FIG. 2

300

Receive request from
client machine
310

Receive unique
client identifier
315

Select unique server identifier
based on mapping function comprised
of unique client identifier and
state indicators
320

Connect client machine
to server
325

FIG. 3

**Bit vector**

**Hash mod 12**

| Hash mod 12 | 1 | 2 | 3 | 4 | 5 | 6 | 7 | 8 | 9 | A | B | C | D | E | F |
|---|---|---|---|---|---|---|---|---|---|---|---|---|---|---|---|
| 0 | 0 |   | 0 |   | 0 |   | 0 |   | 0 |   | 0 |   | 0 |   | 0 |
| 1 |   | 1 | 1 |   |   | 1 | 1 |   |   | 1 | 1 |   |   | 1 | 1 |
| 2 |   |   |   | 2 | 2 | 2 | 2 |   |   |   |   | 2 | 2 | 2 | 2 |
| 3 |   |   |   |   |   |   |   | 3 | 3 | 3 | 3 | 3 | 3 | 3 | 3 |
| 4 | 0 |   | 0 |   | 0 |   | 0 |   | 0 |   | 0 |   | 0 |   | 0 |
| 5 |   | 1 | 1 |   |   | 1 | 1 |   |   | 1 | 1 |   |   | 1 | 1 |
| 6 |   |   |   | 2 | 2 | 2 | 2 |   |   |   |   | 2 | 2 | 2 | 2 |
| 7 |   |   |   |   |   |   |   | 3 | 3 | 3 | 3 | 3 | 3 | 3 | 3 |
| 8 | 0 |   | 0 |   | 0 |   | 0 |   | 0 |   | 0 |   | 0 |   | 0 |
| 9 |   | 1 | 1 |   |   | 1 | 1 |   |   | 1 | 1 |   |   | 1 | 1 |
| 10 |   |   |   | 2 | 2 | 2 | 2 |   |   |   |   | 2 | 2 | 2 | 2 |
| 11 |   |   |   |   |   |   |   | 3 | 3 | 3 | 3 | 3 | 3 | 3 | 3 |

FIG. 4

FIG. 5

Hash mod 12

Bit vector

| Bit vector \ Hash mod 12 | 0 | 1 | 2 | 3 | 4 | 5 | 6 | 7 | 8 | 9 | 10 | 11 |
|---|---|---|---|---|---|---|---|---|---|---|---|---|
| 1 | 0 | 0 | 0 | 0 | 0 | 0 | 0 | 0 | 0 | 0 | 0 | 0 |
| 2 | 1 | 1 | 1 | 1 | 1 | 1 | 1 | 1 | 1 | 1 | 1 | 1 |
| 3 | 0 | 1 | 0 | 1 | 0 | 1 | 0 | 1 | 0 | 1 | 0 | 1 |
| 4 | 2 | 2 | 2 | 2 | 2 | 2 | 2 | 2 | 2 | 2 | 2 | 2 |
| 5 | 2 | 0 | 0 | 2 | 2 | 0 | 0 | 2 | 2 | 0 | 0 | 2 |
| 6 | 2 | 1 | 1 | 2 | 2 | 1 | 1 | 2 | 2 | 1 | 1 | 2 |
| 7 | 2 | 1 | 0 | 2 | 2 | 1 | 0 | 2 | 2 | 1 | 0 | 2 |
| 8 | 3 | 3 | 3 | 3 | 3 | 3 | 3 | 3 | 3 | 3 | 3 | 3 |
| 9 | 3 | 0 | 0 | 3 | 3 | 0 | 0 | 3 | 3 | 0 | 0 | 3 |
| A | 3 | 1 | 1 | 3 | 3 | 1 | 1 | 3 | 3 | 1 | 1 | 3 |
| B | 3 | 1 | 0 | 3 | 3 | 1 | 0 | 3 | 3 | 1 | 0 | 3 |
| C | 3 | 2 | 2 | 3 | 3 | 2 | 2 | 3 | 3 | 2 | 2 | 3 |
| D | 3 | 2 | 0 | 3 | 3 | 2 | 0 | 3 | 3 | 2 | 0 | 3 |
| E | 3 | 2 | 1 | 3 | 3 | 2 | 1 | 3 | 3 | 2 | 1 | 3 |
| F | 3 | 2 | 1 | 3 | 3 | 2 | 1 | 3 | 3 | 2 | 1 | 3 |

| $N$ | $lcm(1,2,\cdots,N)$ | $2^N - 1$ |
|---|---|---|
| 2 | 2 | 3 |
| 3 | 6 | 7 |
| 4 | 12 | 15 |
| 5 | 60 | 31 |
| 6 | 60 | 63 |
| 7 | 420 | 127 |
| 8 | 840 | 255 |
| 9 | 2,520 | 511 |
| 10 | 2,520 | 1,023 |
| 11 | 27,720 | 2,047 |
| 12 | 27,720 | 4,095 |
| 13 | 360,360 | 8,191 |
| 14 | 360,360 | 16,383 |
| 15 | 360,360 | 32,767 |
| 16 | 720,720 | 65,535 |

FIG. 6

FIG. 7

FIG. 8

L=12

adjust=[0,0,1,1]

active=[0,2,3]

ones=3

zeroes=1

hash=9

500-0

mask=1101

204a

208a

220a

200a

212a

216a

62a

FIG. 9

FIG. 10

FIG. 11

FIG. 12

Hash mod 12

| | | | | | | | Bit vector | | | | | | | |
|---|---|---|---|---|---|---|---|---|---|---|---|---|---|---|
| | 1 | 2 | 3 | 4 | 5 | 6 | 7 | 8 | 9 | A | B | C | D | E | F |
| 0 | 0 | 1 | 0 | 2 | 0 | 1 | 0 | 3 | 0 | 1 | 0 | 2 | 0 | 1 | 0 |
| 1 | 0 | 1 | 1 | 2 | 2 | 2 | 1 | 3 | 3 | 3 | 1 | 3 | 2 | 2 | 1 |
| 2 | 0 | 1 | 0 | 2 | 0 | 1 | 2 | 3 | 0 | 1 | 3 | 2 | 3 | 3 | 2 |
| 3 | 0 | 1 | 1 | 2 | 2 | 2 | 0 | 3 | 3 | 3 | 0 | 3 | 0 | 1 | 3 |
| 4 | 0 | 1 | 0 | 2 | 0 | 1 | 1 | 3 | 0 | 1 | 1 | 2 | 2 | 2 | 0 |
| 5 | 0 | 1 | 1 | 2 | 2 | 2 | 2 | 3 | 3 | 3 | 3 | 3 | 3 | 3 | 1 |
| 6 | 0 | 1 | 0 | 2 | 0 | 1 | 0 | 3 | 0 | 1 | 0 | 2 | 0 | 1 | 2 |
| 7 | 0 | 1 | 1 | 2 | 2 | 2 | 1 | 3 | 3 | 3 | 1 | 3 | 2 | 2 | 3 |
| 8 | 0 | 1 | 0 | 2 | 0 | 1 | 2 | 3 | 0 | 1 | 3 | 2 | 3 | 3 | 0 |
| 9 | 0 | 1 | 1 | 2 | 2 | 2 | 0 | 3 | 3 | 3 | 0 | 3 | 0 | 1 | 1 |
| 10 | 0 | 1 | 0 | 2 | 0 | 1 | 1 | 3 | 0 | 1 | 1 | 2 | 2 | 2 | 2 |
| 11 | 0 | 1 | 1 | 2 | 2 | 2 | 2 | 3 | 3 | 3 | 3 | 3 | 3 | 3 | 3 |

| Transition | | Ideal | Figure 5 | | Figure 12 | |
|---|---|---|---|---|---|---|
| From | To | Count | Count | Excess | Count | Excess |
| 1 | 3 | 6 | 6 | 0% | 6 | 0% |
| 1 | 5 | 6 | 6 | 0% | 6 | 0% |
| 1 | 9 | 6 | 6 | 0% | 6 | 0% |
| 2 | 3 | 6 | 6 | 0% | 6 | 0% |
| 2 | 6 | 6 | 6 | 0% | 6 | 0% |
| 2 | A | 6 | 6 | 0% | 6 | 0% |
| 4 | 5 | 6 | 6 | 0% | 6 | 0% |
| 4 | 6 | 6 | 6 | 0% | 6 | 0% |
| 4 | C | 6 | 6 | 0% | 6 | 0% |
| 8 | 9 | 6 | 6 | 0% | 6 | 0% |
| 8 | A | 6 | 6 | 0% | 6 | 0% |
| 8 | C | 6 | 6 | 0% | 6 | 0% |
| 3 | 7 | 4 | 5 | 8% | 8 | 33% |
| 3 | B | 4 | 5 | 8% | 8 | 33% |
| 5 | 7 | 4 | 5 | 8% | 8 | 33% |
| 5 | D | 4 | 5 | 8% | 8 | 33% |
| 6 | 7 | 4 | 5 | 8% | 8 | 33% |
| 6 | E | 4 | 5 | 8% | 8 | 33% |
| 9 | B | 4 | 5 | 8% | 10 | 50% |
| 9 | D | 4 | 5 | 8% | 8 | 33% |
| A | B | 4 | 5 | 8% | 10 | 50% |
| A | E | 4 | 5 | 8% | 8 | 33% |
| C | D | 4 | 5 | 8% | 8 | 33% |
| C | E | 4 | 5 | 8% | 8 | 33% |
| 7 | F | 3 | 3 | 0% | 9 | 50% |
| B | F | 3 | 3 | 0% | 9 | 50% |
| D | F | 3 | 3 | 0% | 9 | 50% |
| E | F | 3 | 3 | 0% | 9 | 50% |
| Average | | | | 4% | | 23% |

FIG. 13

**EP 2 222 054 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003108052 A1